(19) Europäisches Patentamt
European Patent Office
Office européen des brevets

(11) **EP 2 902 543 A2**

(12) **EUROPEAN PATENT APPLICATION**
published in accordance with Art. 153(4) EPC

(43) Date of publication:
05.08.2015 Bulletin 2015/32

(51) Int Cl.:
**D06M 11/77** (2006.01)     **D06M 15/693** (2006.01)
**D06M 101/30** (2006.01)

(21) Application number: 13841874.4

(22) Date of filing: 27.09.2013

(86) International application number:
PCT/KR2013/008694

(87) International publication number:
WO 2014/051385 (03.04.2014 Gazette 2014/14)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 28.09.2012 KR 20120109477

(71) Applicant: Kolon Industries, Inc.
Gwacheon-si, Gyeonggi-do 427-709 (KR)

(72) Inventors:
• JIN, Hye-Seung
Yongin-si
Gyeonggi-do 446-797 (KR)
• KIM, Ki-Jeong
Yongin-si
Gyeonggi-do 446-797 (KR)
• KIM, Jae-Hyung
Yongin-si
Gyeonggi-do 446-797 (KR)

• KIM, Hyung-Keun
Yongin-si
Gyeonggi-do 446-797 (KR)
• YOUN, Jung-Hoon
Yongin-si
Gyeonggi-do 446-797 (KR)
• LEE, Sang-Mok
Yongin-si
Gyeonggi-do 446-797 (KR)
• KWAK, Dong-Jin
Yongin-si
Gyeonggi-do 446-797 (KR)
• KIM, Hee-Jun
Yongin-si
Gyeonggi-do 446-797 (KR)

(74) Representative: Ter Meer Steinmeister & Partner
Patentanwälte mbB
Postfach 86 07 69
81634 München (DE)

(54) **COATED FABRIC FOR AIRBAG**

(57) The present invention relates to a coated fabric for an airbag. Particularly, the present invention provides a coated fabric for an airbag on a surface of which a coating layer including liquid silicone rubber having elongation of 1000% or more, as measured according to Korean Industrial Standards (KS) M 6518, is included, and a method of manufacturing the same.

According to the present invention, the elongation of liquid silicone rubber is excellent so that damage to the fabric for an airbag is minimized under a severe condition of high temperature and high pressure is minimized, and thus the airbag may have excellent inflation and deployment performance, and simultaneously provides excellent storage, dimensional stability, and airtightness effect, thereby safely protect passengers even upon vehicle collision and rollover.

FIG. 1

**Description**

## BACKGROUND OF THE INVENTION

**(a) Field of the Invention**

The present invention relates to a coated fabric for an airbag. Particularly, the present invention relates to a coated fabric for an airbag having excellent mechanical properties and internal pressure maintenance performance of the coated fabric by applying a certain liquid silicone rubber to a surface of the fabric.

**(b) Description of the Related Art**

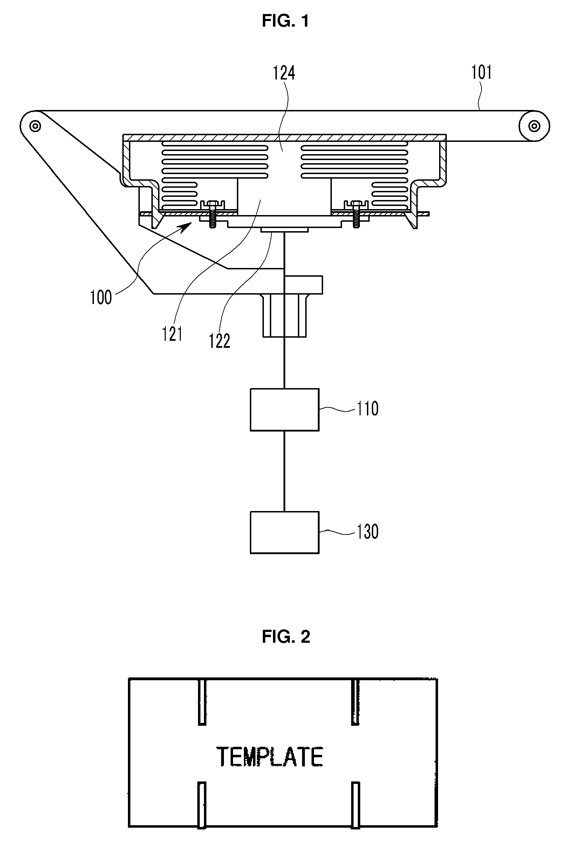

Generally, an airbag refers to a device used to protect drivers and passengers during a head-on collision of a vehicle driving at a speed of about 40 km/h or more, by sensing collision impact of the vehicle with an impact sensor, and then exploding gunpowder to supply a gas into the airbag, thereby inflating it. A typical structure of an airbag system is as shown in FIG. 1.

As shown in FIG. 1, a typical airbag system is configured to include: an airbag cushion module 100 consisting of an inflator 121 generating gas by ignition of a detonator 122, and an airbag 124 deployed by inflation towards the driver in a driver's seat by the generated gas, and mounted on a steering wheel 101; an impact sensor 130 generating an impact signal at collision; and an electronic control module 110 igniting the detonator 122 of the inflator 121 by the impact signal. In the airbag system as configured above, when a vehicle collides head-on, the impact sensor 130 senses an impact to transmit a signal to the electronic control module 110. Herein, the electronic control module 110 recognizing the signal, and ignites the detonator 122 to burn a gas generator inside the inflator 121. The thus-burned gas generator inflates the airbag 124 through rapid gas generation. The airbag 124 thus deployed by inflation contacts the frontal upper body of the driver to partly absorb an impact load caused by collision, and in case where the head and the chest of the driver move to the front by inertia to collide with the inflated airbag 124, the gas in the airbag 124 is rapidly emitted to an emission hole formed on the airbag 124, and acts as a buffer to the front of the driver. Thus, a secondary injury may be reduced by effectively buffering an impact force transmitted to the driver upon frontal collision.

Among the airbags used in a vehicle as described above, a curtain airbag, which is an airbag to protect passengers upon a rollover accident or a side collision, maintains internal pressure for a certain period time, thereby protecting passengers from a secondary collision or a vehicle rollover.

Due to rapid gas generation and the like in an inflator as such, a coating layer may be further applied to an airbag, thereby increasing airtightness of an airbag, in order to exhibit excellent inflation and deployment performances of the airbag upon deployment. However, in case where the existing coated fabric was applied, due to the low elongation of liquid silicone rubber, a silicone coating layer on a seam area was torn or generated a hole thereon upon deployment to generate air-leakage, thereby making it difficult to maintain internal pressure for a certain period time. Recently, as an ejection mitigation test to evaluate the safety of a curtain airbag for protecting a passenger upon a vehicle rollover accident has been enhanced, the excellent internal pressure performance of a cushion is demanded.

Therefore, research on development of a fabric for an airbag capable of maintaining internal pressure for a certain period of time is required, so that excellent inflation and deployment performances may be exhibited by minimizing fabric damage upon deployment of an airbag.

## SUMMARY OF THE INVENTION

The present invention has been made in an effort to provide a coated fabric for an airbag capable of minimizing fabric damage due to high pressure and temperature upon deployment of an airbag, and maintaining excellent inflation performance and internal pressure for a certain period of time.

In addition, the present invention has been made in an effort to provide a method of manufacturing the coated fabric for an airbag.

An exemplary embodiment of the present invention provides a coated fabric for an airbag, including a coating layer including liquid silicone rubber having elongation of 1000% or more as measured according to Korean Industrial Standard(KS) M 6518, formed on a surface of the fabric.

The fabric may include one or more fibers selected from the group consisting of nylon-based, polyester-based, polyolefin-based, and aramid-based fibers.

The liquid silicone rubber may have viscosity of 150,000 to 290,000 cP, as measured according to American Society for Testing and Materials, ASTM D 427.

The liquid silicone rubber may have a coated amount per unit area of the fabric of 15 to 150 g/m$^2$.

The coated fabric for an airbag of the present invention may have tear strength of 350N or more, as measured according to International Organization for Standardization, ISO 13934-2.

The coated fabric for an airbag of the present invention may have a scrub resistance number of 2000 strokes or more, as measured according to ISO 5981.

Another exemplary embodiment of the present invention provides a method of manufacturing a coated fabric for an airbag, including: weaving a fabric; scouring the woven fabric; tentering the scoured fabric; and forming a coating layer including liquid silicone rubber on a surface of the tentered fabric, wherein the liquid silicone rubber has elongation of 1000% or more, as measured according to KS M 6518.

The liquid silicone rubber may have a coated amount per unit area of the fabric of 15 to 150 $g/m^2$.

The method of manufacturing the coated fabric for an airbag may further include vulcanizing the fabric on which the coating layer is formed, under a temperature condition of 150 to 200 °C.

## BRIEF DESCRIPTION OF THE DRAWINGS

FIG. 1 is a diagram showing a general airbag system.
FIG. 2 is a schematic diagram showing a scrub resistance measuring device, according to ISO 5981.
FIG. 3 is a schematic diagram showing an airbag internal pressure measuring device according to an exemplary embodiment of the present invention.

## DETAILED DESCRIPTION OF THE EMBODIMENTS

Hereinafter, a coated fabric for an airbag and a method of manufacturing the same according to a specific exemplary embodiment of the present invention will be described in more detail. However, this is presented as an illustration of the present invention, and does not limit the scope of protection of the invention. It is obvious to a person skilled in the art that various modifications of an exemplary embodiment are possible within the scope of protection of the invention.

Additionally, unless specifically indicated herein, "comprising" or "containing" refers to including any constitutional element (or constitutional ingredient) without specific limitations, and it should not be interpreted as excluding the addition of other constitutional elements (or constitutional ingredients).

The present invention may prevent gas leakage and improve air tightness while simultaneously securing dimensional stability, so that excellent airbag inflation and deployment performances are exhibited even under a severe condition of high temperature and pressure by forming a coating layer including a certain high elongation liquid silicone rubber during the manufacture of a fabric for an airbag.

According to an exemplary embodiment of the present invention, a coated fabric for an airbag is provided. The coated fabric for an airbag may have a coating layer including liquid silicone rubber formed on a surface of the fabric, the liquid silicone rubber having elongation of 1000% or more, preferably 1200% or more, and more preferably 1500% or more, as measured according to KS M 6518.

In the present invention, a fabric for an airbag refers to a fabric, a nonwoven fabric, or the like used in the manufacture of an airbag for vehicles. Any generally usable airbag is possible, and its kind is not particularly limited. For example, the fabric for an airbag may be manufactured by one or more fibers selected from the group consisting of nylon-based, polyester-based, polyolefin-based, and aramid-based fibers. Herein, it is preferred to manufacture the fabric using nylon 66 fiber in terms of thermal resistance, strength, and durability.

The fineness of the fiber may be 210 to 1500 denier, and preferably 315 to 1260 denier. The fineness of the fiber is preferably 315 denier in terms of strength. Further, the thickness of yarn is preferably 1260 denier or less in terms of storage. The denier refers to a unit representing a thickness of yarn or fiber, and 1 denier corresponds to 1 g per 9000 m in length.

The coating layer in the fabric for an airbag of the present invention is for improving mechanical properties of the fabric for an airbag and effectively blocking air permeation to the surface of a plain weave fabric, and also for improving bonding performance and air tightness through chemical bonding to the fabric and the like. The coating layer has excellent elongation and excellent seam coverage performance, and hardly generates cracks on the layer upon deployment of an airbag to significantly reduce an air-leakage phenomenon thereby showing excellence also in internal pressure maintenance. The coating layer by the rubber component may be formed on one or both surfaces of the fabric. The fabric for an airbag of the present invention is characterized by applying the liquid silicone rubber to the coating layer, and an elongation of the coating layer corresponds to an elongation of the liquid silicone rubber itself. The fabric for an airbag to which the liquid silicone is applied may have an excellent property in terms of internal pressure maintenance by reducing an air-leakage phenomenon on the coating layer upon deployment.

In particular, in the coated fabric for an airbag of the present invention, if the elongation of the liquid silicone rubber is less than 1000%, cracks may be generated on the silicone rubber upon deployment of an airbag. Further, a problem may occur on the property of maintaining a certain pressure (25 Kpa) for a certain period of time (6 seconds) since gas may be leaked through those cracks. On the other hand, if the elongation of the liquid silicone rubber is above 2000%, namely, the elongation of the silicone rubber is too much higher than the elongation of the fabric, the coating layer is stretched more largely than that of the fabric to cause the fabric torn. Therefore, the liquid silicone rubber may have elongation of 2000% or less, 1900% or less, or 1800% or less.

The liquid silicone rubber may have a viscosity of 300,000 cP (centipoise) or less, or 100,000 to 300,000 CP, preferably 290,000 CP or less, more preferably 290,000 CP or less, as measured according to ASTM D 427. The liquid silicone rubber may have a viscosity of 300,000 cP or less, in terms of workability. Further, the liquid silicone rubber may have a viscosity of 100,000 CP or more, or 150,000 CP or more, in terms of forming a coating layer having a certain thickness or more.

In the present invention, the coated amount of the liquid silicone rubber per unit area of the fabric may be 15 to 150 $g/m^2$, preferably 20 to 140 $g/m^2$, more preferably 30 to 130 $g/m^2$. In order to obtain excellent scrub resistance and internal pressure maintenance effect, the coated amount may be 15 $g/m^2$ or more. Further, the coated amount may be 150 $g/m^2$ or less, in terms of storage.

According to another exemplary embodiment of the present invention, a method of manufacturing the coated fabric for an airbag as described above is provided. The method of manufacturing the coated fabric for an airbag may undergo a forming process of a coating layer including certain high elongation liquid silicone rubber, together with weaving, scouring, and tentering processes.

The method of manufacturing the coated fabric for an airbag of the present invention may include weaving a fabric, scouring the woven fabric, tentering the scoured fabric, and forming a coating layer including liquid silicone rubber on a surface of the tentered fabric. Further, the liquid silicone rubber may have elongation of 1000% or more, as measured by a physical test method of vulcanized rubber according to KS M 6518.

In particular, the liquid silicone rubber may have elongation of 1000% or more, preferably 1200% or more, more preferably 1500% or more. If the liquid silicone rubber has elongation of less than 1000%, cracks may be generated on the coating layer upon deployment of an airbag to leak gas, thereby significantly reducing an internal pressure maintenance property, so that an ejection mitigation test requirement (internal pressure of 25 KPa is maintained for 6 seconds after deployment) may not be satisfied. Meanwhile, in case of liquid silicone rubber having high elongation, a silicone coating layer may be stretched with the fabric upon deployment to cause the fabric to be torn. Therefore, the liquid silicone rubber may have elongation of 2000% or less, 1900% or less, or 1800% or less.

In the present invention, the coated fabric for an airbag may be manufactured through processes of weaving a fabric using a fiber as the weft and warp, scouring, and tentering. To the weaving, scouring, and tentering processes, generally known process conditions and methods may be applied, and these are not particularly limited to specific conditions.

In the method of manufacturing the fabric for an airbag, details of the kind and the fineness of fiber are as described above.

A weaving process of an airbag in the present invention is used to arrange the warp and weft at regular spacing to prepare a grey fabric, and in the weaving process of the fabric, a weave type of the fabric is not limited to a certain one, but any generally usable type is possible. Generally, a plain weave may be used. Further, the weave may be manufactured using a typical weaving machine, and the weaving machine is not limited to a particular one. For example, the weaving process may consist of a method using a rapier or gripper loom to insert weft by threading a pointed needle, a weaving method using an air jet loom, a weaving method using a water jet loom, a method using a Jacquard loom, and the like.

The fabric for an airbag may have warp density and weft density, that is, woven density in a warp direction and a weft direction of 36 to 65 th/inch, preferably 38 to 63 th/inch, and more preferably 40 to 60 th/inch, respectively. The polyester fabric may have warp density and weft density of 36 th/inch or more, respectively, in terms of securing excellent mechanical properties of the fabric for an airbag. Further, the woven density may be 65 th/inch or less, respectively, in terms of improving airtightness of the fabric and a folding property.

For the airtightness of the fabric for an airbag, it is important that energy absorption performance is maximized during high temperature and high pressure gas discharge, so as to withstand tensile force by high-pressure air and the like to minimize stretching, and simultaneously to secure sufficient mechanical properties during airbag operation. Accordingly, the fabric may be woven and processed to have a cover factor or 1800 to 2460, according to following Calculation Formula 1, thereby improving the airtightness and the energy absorption property upon deployment of an airbag.

[Calculation Formula 1]

$$\text{Cover factor (CF)} = Warp\ density\ \times\ \sqrt{Warp\ fineness} + Weft\ density\ \times\ \sqrt{Weft\ fineness}$$

Herein, if the cover factor of the fabric is less than 1800, air may be easily released to the outside upon air inflation, and if the cover factor of the fabric is more than 2460, the storage and folding property of an airbag cushion may be significantly deteriorated when mounting an airbag.

From the thus-woven fabric in the present invention, contaminants and foreign substances generated in yarn production or fabric weaving may be washed to be removed through the scouring process. Particularly, used chemicals such as an oiling agent, a sizing agent, and the like may be removed, in order to increase a gathering property of yarn during a weaving process.

The tentering process is used to control the density and the size of the fabric by adjusting the density of the fabric shrunk in the scouring process to a certain level required of a product. The tentering process in the present invention may be carried out under a temperature condition of 150 to 190 °C, preferably 155 to 185 °C, and more preferably 160 to 180 °C. The tentering process temperature may be carried out in the above-described range, in terms of minimizing thermal shrinkage of the fabric and improving dimensional stability.

The tentering process may be completed by cooling the fabric using a cooling cylinder, and then winding it.

The tentered fabric may undergo a coating process of liquid silicone rubber on one or both surfaces of the fabric. The details of the elongation, viscosity, coated weight, thickness of a coating layer, and the like of the liquid silicone rubber are as described above.

The coating process of the liquid silicone rubber is for improving mechanical properties of the fabric for an airbag and effectively blocking air permeation to the surface of a plain weave fabric, and also for improving bonding performance and air tightness through chemical bonding to the fabric, and the like. The liquid silicone rubber is coated on the entire of the fabric surface. As a coating method, a general coating method such as a knife coating method, a doctor blade method, and a spray coating method may be carried out, and preferably a knife coating method is used.

For example, when using a knife over air method, a coated amount may be adjusted by sharpness of the knife and tension of the fabric. A coating process order includes equipping a knife after checking the thickness of the knife, depending on the coated weight, and then mounting a plate for preventing a coating agent from flowing out into the other sides. Further, by proceeding with silicone discharge after setting the height and the angle depending on the coated weight, a base coating operation may be carried out. In order to suppress a fabric sticking phenomenon generated from the thickness and viscosity of the coating, a top coating operation may be carried out. Herein, the top coating may proceed in a manner of a gravure roll.

In order to dry the coating finished fabric and cure the coating agent, the fabric on which a coating layer is formed may further undergo a vulcanizing process. With the vulcanizing process lastly performed, the coating process is completed.

The vulcanizing process may be carried out at a temperature of 150 to 200 °C, preferably 160 to 190 °C, and most preferably 165 to 185 °C to proceed with curing. The vulcanizing temperature may be 150 °C or more in terms of improving scrub resistance, and 200 °C or less in terms of securing a preferred fabric thickness and stiffness. Further, curing time at the above vulcanizing temperature may be in the range of 120 to 300 seconds, preferably 150 to 250 seconds, and most preferably 180 to 240 seconds. If the curing time is less than 120 seconds, the curing operation of the coating layer by a rubber component is not effectively performed, so that the mechanical properties of the fabric is reduced, and the coating may be stripped off. On the contrary, if the curing time is more than 300 seconds, the finally manufactured fabric has increased stiffness and thickness, thereby decreasing a folding property.

In the present invention, excellent internal pressure maintenance and deployment performance may be secured by optimizing the coated weight of the certain high elongation liquid silicone rubber during the manufacturing process of the fabric for an airbag, as described above.

Meanwhile, the coated fabric for an airbag of the present invention may have a thickness of 0.5 mm or less, or 0.05 to 0.5 mm, preferably 0.3 mm or less, more preferably 0.2 mm or less, as measured according to ASTM D 1777. Particularly, when the fineness of fiber is applied as 315 denier, if the coated amount is 95 $g/m^2$, the thickness may be 0.38 mm or less, if the coated amount is 75 $g/m^2$, the thickness may be 0.35 mm or less, and if the coated amount is 35 $g/m^2$ or less, the thickness may be 0.32 mm or less. Further, when the fineness of fiber is applied as 420 denier, if the coated amount is 95 $g/m^2$, the thickness may be 0.5 mm or less, if the coated amount is 75 $g/m^2$, the thickness may be 0.45 mm or less, and if the coated amount is 35 $g/m^2$, the thickness may be 0.39 mm or less. The thickness of the fabric is preferably to maintain a minimum thickness in a degree of exhibiting sufficient strength when equipping an airbag, and if the thickness of the fabric is more than 0.5 mm, when storing an airbag, a folded part is projected so that it may be difficult to smoothly mount the airbag.

The fabric for an airbag of the present invention is coated with high elongation liquid silicone rubber on the surface of the fabric, thereby exhibiting excellent scrub resistance which represents mechanical strength by friction. Particularly, the fabric for an airbag may maintain excellent scrub resistance as described above, not only under the condition of room temperature (24 °C, 40% RH), but also under a long-term aging condition of high temperature and high humidity, for example, under the condition of 70 °C, 95% RH, and 408 hours. The fabric for an airbag of the present invention may have a scrub resistance number of 2000 strokes or more, or 2000 to 5000 strokes, preferably 2300 strokes or more, more preferably 2500 strokes or more, or 2600 strokes or more, as measured at room temperature, according to ISO 5981. In addition, the fabric for an airbag may have a scrub resistance number of 1400 strokes or more, or 1400 to 4500 strokes, preferably 1450 strokes or more, more preferably 1500 strokes or more, as measured under the long-term aging condition of high temperature and high humidity. Herein, if the scrub resistance is lower than the lower limit of the above range, that is, less than 2000 strokes at room temperature or less than 1400 strokes after long-term aging at high temperature and high humidity, respectively, delamination to strip off the coated surface is generated. Thus, the coated surface may be easily stripped off by an external force when mounting on a vehicle, or easily stripped off by high temperature and high pressure gas, and the like. Hereby, internal pressure may not be maintained well upon deployment of an airbag, to result in disorder of performance to protect passengers upon vehicle collision.

The coated fabric for an airbag may have tear strength of 250 N or more, and more preferably 300 N or more, as measured according to ISO 13934-2, wherein the tear strength represents a force required to tear a fabric. The tear strength may be 300 N or more, in terms of maintaining the shape of an airbag without rupture thereof, upon deployment of the airbag manufactured by the fabric.

Further, the coated fabric for an airbag may be measured as to seam strength which represents the strength of a conjunction part, namely, a co-woven part constituting a boundary between the active zone of an inflating part and the seam of a non-inflating part in the airbag. Particularly, the seam strength may be 150 kgf or more, preferably 160 kgf or more, more preferably 170 kgf or more, as measured on a coated fabric before/after a deployment test, according to ASTM D 1683. The seam strength may be 150 kgf or more, in terms of maintaining the shape of an airbag without rupture of a joining part of the fabric, upon deployment of an airbag manufactured by the fabric.

The fabric for an airbag of the present invention may have excellent mechanical properties such as tear strength and seam strength even after long-term aging under the severe condition of high temperature and pressure, and high temperature and humidity, as well as at room temperature, as described above.

Meanwhile, according to another exemplary embodiment of the present invention, an airbag system including an airbag manufactured using the coated fabric for an airbag is provided.

The airbag system may be equipped with a conventional apparatus that is well-known to a person skilled in the art. The airbag may be largely divided into a frontal airbag and a side curtain airbag. The frontal airbag includes airbags for a driver's seat, a passenger's seat, side protection, knee protection, ankle protection, pedestrian protection, and the like, and the side curtain airbag protects passengers upon vehicle side collision or a rollover accident. Accordingly, the airbag of the present invention includes both the frontal airbag and the side curtain airbag.

The airbag manufactured using the fabric of the present invention as described above in particular exhibits excellent internal pressure maintenance performance as the side curtain type of airbag. For example, when instantaneous pressure of 25 bar is injected into an airbag without a separate aging process, after manufacturing the airbag, maximum pressure upon initial airbag inflation (deployment) is 40 kPa or more, and after 6 seconds, the pressure is maintained at 25 kPa or more, so that the airbag may exhibit excellent performance as a side curtain type airbag for a rollover accident.

When instantaneous pressure of 25 bar is injected to the airbag under the condition of room temperature and airbag internal pressure is measured, the airbag may preferably have initial maximum pressure of 50 KPa or more, and maintained pressure after 6 seconds of 28 KPa, and more preferably initial maximum pressure of 55 KPa or more, and maintained pressure after 6 seconds of 30 KPa.

The airbag according to the present invention may have an internal pressure maintenance rate of 70% or more, preferably 80% or more, and more preferably 90% or more, as measured at room temperature without a separate aging process, even under the severe condition of high temperature and high humidity. Further, the airbag may exhibit an excellent internal pressure maintenance property, which is an internal pressure maintenance rate of 50% or more, preferably 60% or more of initial pressure under the condition of high temperature and high humidity, 6 seconds after airbag inflation.

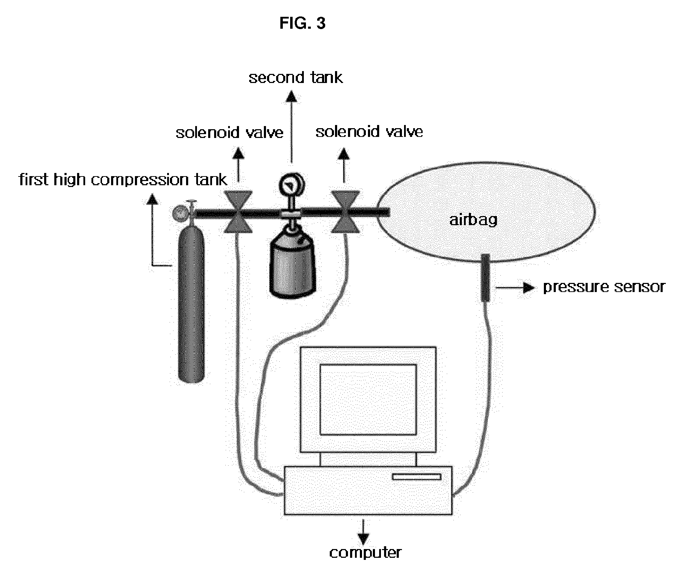

In the preferred exemplary embodiment of the present invention, the internal pressure of the airbag may be measured using a device as shown in FIG. 3. In the measuring device, after a first high compression tank is filled with nitrogen to a high pressure, a first solenoid valve was opened by a computer and controlled so that a second tank may be filled with nitrogen gas to 25 bar. As such, when the second tank is filled, the first solenoid valve is closed, and the second solenoid valve is opened by the computer, so that compressed nitrogen gas filling the second tank with pressure of 25 bar instantaneously enters the airbag at atmospheric pressure to deploy the airbag. The initial maximum pressure inside of the airbag at this time is measured by a pressure sensor, the results are delivered to a computer, and the pressure is measured again after several seconds and the results are recorded by the computer.

According to the present invention, a coated fabric for an airbag having excellent mechanical properties and internal pressure maintenance performance is provided by forming a coating layer including a certain high elongation liquid silicone rubber.

The coated fabric for an airbag has significantly improved adhesive strength to a fabric by using a coating agent based on high elongation liquid silicone rubber resin, and thus the coated surface is not stripped off upon deployment of an inflator, thereby obtaining excellent dimensional stability, mechanical properties, and an airtight effect. Thus, passengers may be safely protected by minimizing the impact on the passengers.

Accordingly, a cushion to which the coated fabric for an airbag according to the present invention is applied may be very preferably used in an airbag system for a vehicle and the like.

In the present invention, since matters other than the above description may be adjustable as necessary, they are not particularly limited in the present invention.

Hereinafter, preferred examples are presented in order to help a better understanding of the present invention, however the following examples are only illustrative of the present invention, and do not limit the scope of the present invention.

[Examples]

Examples 1-7

A grey fabric for an airbag was woven using 420 denier nylon 66 fiber by a Jacquard loom. Herein, the woven density was adjusted to have warp density of 53 th/inch and weft density of 46 th/inch.

The grey fabric underwent a scouring process by passing through a chemical bath and a water wash bath, and thereafter a tentering process under the condition of a temperature of 160-180 °C was continuously followed, thereby manufacturing a non-coated fabric for an airbag. Herein, the woven density of the fabric after scouring was warp density of 57 th/inch and weft density of 49 th/inch.

The thus-manufactured non-coated fabric was coated with a silicone coating agent based on liquid silicone rubber (LSR) resin in a manner of knife over air, so as to have a silicone rubber coated amount of 55-95 g/m$^2$, and then dried. After drying, the fabric was cured at a vulcanizing temperature of 190 °C for 300 seconds to manufacture a silicone-coated fabric for an airbag.

The elongation measured according to KS M 6518 and the viscosity measured according to ASTM D 427 of the liquid silicone rubber are as set forth in Table 1 below:

The kind of yarn, the coated weight, and the like used in Examples 1-7 are as set forth in Table 1, and the remaining conditions followed general conditions for manufacturing a fabric for an airbag.

[Table 1]

|  | Example 1 | Example 2 | Example 3 | Example 4 | Example 5 | Example 6 | Example 7 |
|---|---|---|---|---|---|---|---|
| Kind of yarn | Nylon | Nylon | Nylon | Nylon | Nylon | Nylon | Nylon |
| Total fineness of yarn (D) | 420 | 420 | 420 | 420 | 420 | 420 | 420 |
| Number of filament (F) | 68 | 68 | 72 | 72 | 72 | 136 | 136 |
| Viscosity of liquid silicone rubber (cP) | 165,000 | 165,000 | 165,000 | 165,000 | 165,000 | 165,000 | 165,000 |
| Elongation of liquid silicone rubber (%) | 1700 | 1700 | 1700 | 1700 | 1700 | 1700 | 1700 |
| Coated weight (g/m$^2$) | 65 | 95 | 55 | 65 | 95 | 65 | 95 |

For the fabric for an airbag manufactured according to Examples 1-7 above, various physical properties were measured by the following methods, and the results are summarized in the following Table 2.

(a) Scrub resistance

The scrub resistance of a fabric was evaluated using a scrub resistance measuring device according to ISO 5981, as set forth in FIG. 2.

First, a coated fabric was cut into a specimen, and the fabric specimen was pressed with a press in the scrub tester and repeatedly moved while holding both sides of the fabric specimen for scrub testing, while measuring the number of movements until the coating on the fabric started to be stripped off.

Herein, the scrub resistance measurement was represented by measuring the total number of reciprocating movements of an abrader under the condition of a pressure force of 10 N. If the coating is not stripped off after the reciprocating movement of every 50 strokes, it passes and the reciprocating movement is continued, and if the coating is stripped off, it fails and the reciprocating movement is stopped. Herein, the number of movements at which the coating layer is stripped was measured in warp/weft directions of the fabric, respectively.

The specimen of the coated fabric was tested for scrub resistance under a condition of room temperature, and after aging at 70 °C, 95% RH, and for 408 hours. When the scrub resistance number as measured as described above is 2000 strokes or more, both under the condition of room temperature and under the aging condition, the specimen was evaluated as "good". When the measurement results under the condition of room temperature and the aging condition include one or more cases of being from 1000 strokes to less than 2000 strokes, the specimen was evaluated as "slightly good". When the measurement results include one or more cases of being less than 1000 strokes, the specimen was evaluated as "poor".

(b) Tear strength

Tear strength was measured in warp/weft directions, according to German Institute for Standardization, DIN 53356.

Tear strength refers to resistance to tearing, that is, a force required to tear a fabric. Top, bottom, and center of a tetragonal specimen were cut to prepare a specimen. One side was clamped to an upper jig and another side was clamped to a lower jig in order to proceed with a test.

(c) Seam strength

The seam strength was measured on the same position of a coated fabric before/after a deployment test, according to ASTM D 5822.

Seam strength refers to strength on a conjunction part at which an active zone (chamber) where airbag gas enters and a seam area meet. A specimen was cut so that the conjunction part was located at the center, and clamped to a lower clamp of a seam strength measuring device according to ASTM D 5822. The strength when the airbag cushion specimen was ruptured was measured, while moving an upper clamp up.

(d) Internal pressure maintenance test

As set forth in FIG. 3, nitrogen gas compressed to 25 bar was instantaneously injected with air to deploy an airbag. Thereafter, the internal pressure change of the airbag was observed over time, thereby measuring initial highest pressure upon instantaneous pressure injection and airbag internal pressure after 6 seconds, respectively.

[Table 2]

| | | Example 1 | Example 2 | Example 3 | Example 4 | Example 5 | Example 6 | Example 7 |
|---|---|---|---|---|---|---|---|---|
| Scrub resistance number room temperature (stroke) | Warp direction | 3000 | 3000 | 2700 | 3000 | 3000 | 3000 | 3000 |
| | Weft direction | 3000 | 3000 | 2800 | 2800 | 3000 | 3000 | 3000 |
| Scrub resistance number aging (stroke) | Warp direction | 2200 | 3000 | 3000 | 3000 | 3000 | 3000 | 3000 |
| | Weft direction | 2500 | 3000 | 2800 | 3000 | 3000 | 2500 | 3000 |

(continued)

| | | Example 1 | Example 2 | Example 3 | Example 4 | Example 5 | Example 6 | Example 7 |
|---|---|---|---|---|---|---|---|---|
| Scrub resistance evaluation | | Good | Good | Good | Good | Good | Good | Good |
| Tear strength (N) (before deployment test) | Warp direction | 310 | 317 | 303 | 320 | 318 | 362 | 367 |
| | Weft direction | 329 | 358 | 301 | 359 | 362 | 377 | 387 |
| Tear strength (N) (after deployment test) | Warp direction | 303 | 320 | 301 | 318 | 317 | 361 | 362 |
| | Weft direction | 324 | 350 | 302 | 357 | 360 | 367 | 388 |
| Seam strength (kgf) (before deployment test) | | 178.3 | 188.6 | 186.6 | 182.3 | 187.4 | 176.5 | 187.5 |
| Seam strength (kgf) (after deployment test) | | 176.5 | 185.3 | 185.9 | 183.8 | 185.2 | 179.4 | 188.1 |
| Internal pressure maintenance (KPa) | Initial highest pressure | 96 | 95 | 80 | 87 | 93 | 119 | 119 |
| | After 6 seconds | 60 | 74 | 70 | 69 | 75 | 84 | 98 |

**Comparative Examples 1 - 4**

The fabric for an airbag of Comparative Examples 1-5 was manufactured in the same manner as Examples 1-5, except for the conditions described in the following Table 3.

[Table 3]

| | Comparative Example 1 | Comparative Example 2 | Comparative Example 3 | Comparative Example 4 | Comparative Example 5 |
|---|---|---|---|---|---|
| Kind of yarn | Nylon | Nylon | Nylon | Nylon | Nylon |
| Total fineness of yarn (D) | 420 | 420 | 420 | 420 | 420 |
| Number of filament (F) | 68 | 68 | 72 | 72 | 72 |
| Viscosity of liquid silicone rubber (cP) | 150,000 | 150,000 | 290,000 | 290,000 | 290,000 |
| Elongation of liquid silicone rubber (%) | 700 | 700 | 900 | 900 | 900 |
| Coated weight (g/m$^2$) | 35 | 55 | 35 | 55 | 65 |

For the fabric for an airbag manufactured according to Examples 1-5 above, various physical properties were measured by the above-described method, and the results are summarized in the following Table 4.

[Table 4]

| | | Comparative Example 1 | Comparative Example 2 | Comparative Example 3 | Comparative Example 4 | Comparative Example 5 |
|---|---|---|---|---|---|---|
| Scrub resistance number room temperature (stroke) | Warp direction | 1000 | 1500 | 2000 | 1500 | 2000 |
| | Weft direction | 1000 | 1000 | 2000 | 1000 | 2200 |
| Scrub resistance number aging (stroke) | Warp direction | 150 | 150 | 150 | 150 | 200 |
| | Weft direction | 100 | 150 | 180 | 150 | 150 |
| Scrub resistance evaluation | | Poor | Poor | Poor | Poor | Poor |
| Tear strength (N) (before deployment test) | Warp direction | 233 | 272 | 243 | 281 | 298 |
| | Weft direction | 215 | 252 | 228 | 294 | 293 |
| Tear strength (N) (after deployment test) | Warp direction | 203 | 232 | 210 | 266 | 246 |
| | Weft direction | 208 | 229 | 198 | 267 | 232 |
| Seam strength (kgf) (before deployment test) | | 110.4 | 120.8 | 125.3 | 132.8 | 138.3 |
| Seam strength (kgf) (after deployment test) | | 106.4 | 112.9 | 121.7 | 119.5 | 114.7 |
| Internal pressure maintenance (KPa) | Initial highest pressure | 48 | 56 | 52 | 56 | 60 |
| | After 6 seconds | 18 | 24 | 18 | 21 | 23 |

As shown in above Table 2, the coated fabric for an airbag of Examples 1-7 according to the present invention includes a coating agent having excellent elongation, and thus serves to protect a cushion fabric upon deployment. Thus, it is recognized that the fabric damage is minimized under the severe condition of high temperature and high pressure. Particularly, the fabric for an airbag of Examples 1-7, manufactured by adjusting the coated weight of the coated fabric to an optimum range, was confirmed to have significantly improved scrub resistance not only at room temperature but also after aging under the condition of high temperature and high humidity. Particularly, in case of the fabric for an airbag of Examples 1-7, it was recognized that an excellent scrub resistance property of 3000 strokes at room temperature in both warp and weft directions, and 2000 to 3000 strokes after aging under the condition of high temperature and high humidity, was exhibited.

On the contrary, as shown in the above Table 4, it was confirmed that the fabric for an airbag of Comparative Examples 1-5, manufactured by applying liquid silicone rubber having elongation of 700 to 900%, did not satisfy the properties. Particularly, the fabric for an airbag of Comparative Examples 3-4 resulted in significantly reducing the tear strength of a fabric for an airbag after deployment. Moreover, it was recognized that the fabric for an airbag of Comparative Examples 3-4 had significantly deteriorated scrub resistance of less than 1000 strokes after aging.

Further, as shown in above Table 2, the coated fabric damage after deployment was minimized by applying the coating agent having excellent elongation according to the present invention, and thus it was confirmed that the fabric for an airbag of Examples 1-7 had excellent internal pressure maintenance performance. Particularly, as a result of testing an airbag for internal pressure maintenance performance at room temperature, for an airbag for a vehicle including the fabric for an airbag of Examples 1-7, all had initial highest pressure of 45 KPa or more, and also airbag internal pressure after 6 seconds of 25 KPa or more, which are excellent results.

On the contrary, it was confirmed that the fabric for an airbag of Comparative Examples 1-5 to which general low elongation liquid silicone rubber was applied had significantly deteriorated internal pressure maintenance performance. Particularly, the airbag for a vehicle including the fabric for an airbag of Comparative Examples 1-5 had significantly deteriorated internal pressure maintenance performance, that is, initial highest pressure at room temperature of less than 45 KPa and airbag internal pressure after 6 seconds of less than 25 KPa. Hereby, in case of using the fabric for an airbag of Comparative Examples 1-5, the function as an airbag may be difficult to be applied when mounting on a vehicle as a rollover type of side curtain airbag. That is, the fabric for an airbag of Comparative Examples 1-5 had deteriorated internal pressure maintenance performance when applied as a real airbag cushion for a vehicle, and thus may not be applied to a rollover type of side curtain airbag.

**Claims**

1. A coated fabric for an airbag, comprising a coating layer including liquid silicone rubber having elongation of 1000% or more, as measured according to Korean Industrial Standards (KS) M 6518, formed on a surface of the fabric.

2. The coated fabric according to Claim 1, including one or more fibers selected from the group consisting of nylon-based, polyester-based, polyolefin-based, and aramid-based fibers.

3. The coated fabric according to Claim 1, wherein the liquid silicone rubber has viscosity of 150,000 to 290,000 cP, as measured according to American Society for Testing and Materials (ASTM) D 427.

4. The coated fabric according to Claim 1, wherein a coated amount of the liquid silicone rubber per unit area of the fabric is 15 to 150 $g/m^2$.

5. The coated fabric according to Claim 1, having tear strength of 350 N or more, as measured according to International Organization for Standardization (ISO) 13934-2.

6. The coated fabric according to Claim 1, having a scrub resistance number of 2000 strokes or more, measured according to International Organization for Standardization (ISO) 5981.

7. A method of manufacturing the coated fabric for an airbag according to any one of Claims 1 to 7, comprising:

   weaving a fabric;
   scouring the woven fabric;
   tentering the scoured fabric; and
   forming a coating layer including liquid silicone rubber on a surface of the tentered fabric,
   wherein the liquid silicone rubber has elongation of 1000% or more, as measured according to Korean Industrial Standards (KS) M 6518.

8. The method according to Claim 7, wherein a coated amount of the liquid silicone rubber per unit area of the fabric is 15 to 150 $g/m^2$.

9. The method according to Claim 7, further comprising vulcanizing the fabric on which the coating layer is formed, under a temperature condition of 150 to 200 °C.

**FIG. 1**

**FIG. 2**

TEMPLATE

FIG. 3